# EUROPEAN PATENT APPLICATION

(11) **EP 4 786 110 A1**
(43) Date of publication of application: **05.08.2026**
(21) Application number: 24877337.6
(22) Date of filing: 08.05.2024
(51) Int. Cl.: B25J 9/00, B25J 5/00, B25J 9/16, B25J 11/00, B25J 13/08, B25J 13/00, G06V 40/16, B25J 19/02

(54) **HOME ROBOT AND CONTROL METHOD THEREOF**

(30) Priority: 11.10.2023 KR 20230134942
(71) Applicant: LG Electronics Inc., Yeongdeungpo-gu Seoul 07336 (KR)
(72) Inventor: CHEOUNG, Jinkwon, Seoul 08592 (KR); SOHN, Byungkon, Seoul 08592 (KR); YU, Kyungman, Seoul 08592 (KR); JOO, Hyungkook, Seoul 08592 (KR)
(74) Representative: Vossius & Partner Patentanwälte Rechtsanwälte mbB
(86) International application number: PCT/KR2024/006117
(87) International publication number: WO 2025/079797

(57) **Abstract**

A home robot according to an embodiment comprises a moving unit for traveling; a camera for capturing an image; and a controller controlling the moving unit and the camera, wherein the controller registers user information for image capturing, sets individual image capturing conditions and situation-based image capturing conditions, respectively, determines whether the individual image capturing conditions and the situation-based image capturing conditions are satisfied while moving within a predetermined area by the moving unit, and controls the camera to capture an image when the individual image capturing conditions and the situation-based image capturing conditions are satisfied.

## Description

### [Technical Field]

The present invention relates to a home robot and a control method thereof.

### [Background Art]

Recently, as various digital image technologies have developed, images or moving images can be captured using various digital devices that generate digital image data, for example, digital cameras, camcorders, cellular phones, and the like.

Image data generated by digital devices may be printed on photographic paper or paper and used like a general image, similarly to a general image generated by printing a film.

In general, an electronic album is a display device that displays photos, moving images, and the like of a user on a display in a form in which data such as photos and moving images related to the user are converted into files, instead of a method of inserting photos into an existing album made of paper or vinyl material.

Such an electronic album provides more convenient photo appreciation and ease of storage as its distribution expands along with the development of technologies of digital products such as computers, digital cameras, and digital camcorders, and can be automated, lightened, and miniaturized compared to existing albums made of paper or vinyl materials.

However, the conventional electronic album has a limitation in that it is limited to a simple viewing function and a storage function, and does not meet expectations of consumers living in an advanced multimedia era.

In addition, the conventional electronic album displays photos and arranges them inside a limited background image for appreciation, and is limited to a function as a still image that simply digitizes and shows a paper album, and has a problem in that it does not meet an expectation of a user who desires to appreciate photos more emotionally.

In this regard, Korean Unexamined Patent Publication No. 10-2022-0015885 discloses an apparatus for providing a memory sharing service based on photo content cloud and an operation method thereof.

### [Disclosure]

### [Technical Problem]

An object of the present invention is to provide a home robot and a control method thereof capable of automatically capturing photos and generating an album according to various set conditions.

Another object of the present invention is to provide a home robot and a control method thereof capable of providing a photo capturing service according to conditions desired by each family member.

Another object of the present invention is to provide a home robot and a control method thereof capable of providing a photo capturing service in which invasion of privacy is minimized and personal information can be protected.

Another object of the present invention is to provide a home robot and a control method thereof capable of providing a convenient and reliable photo capturing service.

Another object of the present invention is to provide a home robot and a control method thereof capable of providing an emotional user interface service.

Another object of the present invention is to provide a home robot and a control method thereof capable of determining a situation of a user and creating a surrounding environment suitable for the situation.

### [Technical Solution]

A home robot according to an embodiment may include a moving unit for traveling, a camera for capturing an image, and a controller for controlling the moving unit and the camera.

The controller may register user information for image capturing.

The controller may set individual image capturing conditions and situation-based image capturing conditions, respectively.

The controller may determine whether the individual image capturing conditions and the situation-based image capturing conditions are satisfied while moving in a predetermined area by the moving unit.

The controller may control the camera to capture an image when the individual image capturing conditions and the situation-based image capturing conditions are satisfied.

The individual image capturing conditions may include at least one of whether image capturing is possible, an image capturing date, an image capturing time, and an image capturing cycle.

The situation-based image capturing conditions may include at least one of an emotional state of a user, a return of the user to home, a family meal, and an anniversary.

The controller may determine the emotional state of the user through a face image of the user acquired by the camera when the situation-based image capturing condition is set as the emotional state of the user.

The controller may output a voice message corresponding to the determined emotional state of the user when the emotional state of the user is determined through the face image of the user acquired by the camera.

The controller may determine whether the user returns home based on whether a mobile terminal of the user is located within a geo-fencing area constructed using a GPS (Global Positioning System) when the situation-based image capturing condition is set as the return of the user to home.

The controller may determine a family meal based on a number of face images of users adjacent to a specific object detected from an image acquired by the camera when the situation-based image capturing condition is set as the family meal.

The controller may determine an anniversary based on specific music acquired by a microphone when the situation-based image capturing condition is set as the anniversary.

The controller may capture an object corresponding to registered user information when the individual image capturing conditions and the situation-based image capturing conditions are satisfied.

The controller may generate an electronic album or a moving image using the captured image.

A control method of a home robot according to the embodiment may include registering user information for image capturing.

The control method of the home robot may further include setting individual image capturing conditions and situation-based image capturing conditions, respectively.

The control method of the home robot may further include determining whether the individual image capturing conditions and the situation-based image capturing conditions are satisfied while moving in a predetermined area by a moving unit.

The control method of the home robot may further include capturing an image using a camera when the individual image capturing conditions and the situation-based image capturing conditions are satisfied.

### [Advantageous Effects]

According to the proposed invention, the following effects are obtained.

First, since the home robot can automatically capture photos and generate an album according to set conditions, there is an advantage in that a photo album can be easily created.

Second, since photos can be captured by setting individual image capturing conditions, there is an advantage in that a photo capturing service according to conditions desired by each family member can be provided.

In particular, since preferences of each family member can be reflected, there is an advantage in that invasion of privacy is minimized and personal information can be protected.

Third, since photos can be captured by setting situation-based image capturing conditions, there is an advantage in that usability is improved.

In particular, since the emotional state of the user or the return of the user is determined and a voice output and photo capturing corresponding thereto are performed, there is an advantage in that a more emotional service can be provided to the user.

In addition, when a family gathering or an anniversary arrives, the home robot can move to a location where the user is located and capture a photo, thereby providing a convenient and reliable photo capturing service.

Fourth, since a situation of the user can be determined through an image acquired by the camera and a sound source corresponding thereto can be streamed and reproduced, there is an advantage in that a surrounding environment suitable for the situation can be created.

### [Description of Drawings]

FIG. 1 is a block diagram showing a network system of a home robot according to an embodiment of the present invention.
FIG. 2 is a block diagram showing an internal configuration of a home robot according to an embodiment of the present invention.
FIG. 3 is a flowchart briefly showing a control method of a home robot according to an embodiment of the present invention.
FIG. 4 is a flowchart showing a control method of a home robot when a situation-based image capturing condition is set as an emotional state of a user according to an embodiment of the present invention.
FIG. 5 is a flowchart showing a control method of a home robot when a situation-based image capturing condition is set as a return of a user to home according to an embodiment of the present invention.
FIG. 6 is a flowchart showing a control method of a home robot when a situation-based image capturing condition is set as a family meal according to an embodiment of the present invention.
FIG. 7 is a diagram showing a traveling map of a home robot according to an embodiment of the present invention.
FIG. 8 is a flowchart showing a control method of a home robot when a situation-based image capturing condition is set as an anniversary according to an embodiment of the present invention.
FIG. 9 is a flowchart showing a control method of a home robot according to another embodiment of the present invention.

### [Mode for Invention]

Hereinafter, some embodiments of the present invention will be described in detail with reference to exemplary drawings. In assigning reference numerals to components of the drawings, it should be noted that the same components are given the same reference numerals as much as possible even if they are illustrated in different drawings. In addition, in describing the embodiments of the present invention, when it is determined that detailed description of related known configurations or functions may obscure the understanding of the embodiments of the present invention, the detailed description thereof will be omitted.

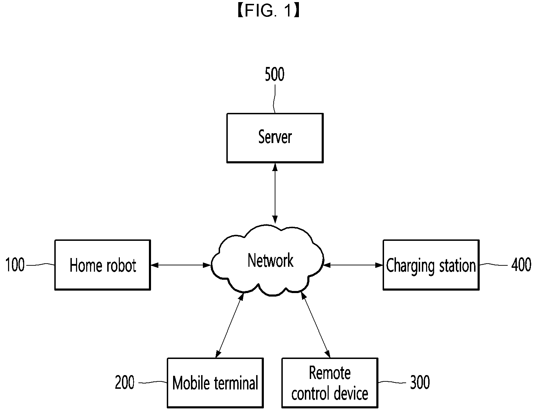

FIG. 1 is a block diagram showing a network system of a home robot according to an embodiment of the present invention.

Referring to FIG. 1, a home robot 100 according to an embodiment of the present invention may autonomously move in a predetermined area and perform a control command requested by a user.

For example, the home robot 100 may include a cleaning robot including a moving module and a suction module to clean a predetermined area.

As another example, the home robot 100 may include a guide robot including a moving module and a display to provide various information to a user.

As still another example, the home robot 100 may include a photographing robot including a moving module and a camera to capture images while moving in a predetermined area.

The home robot 100 may be a robot performing various functions in addition to the above-described cleaning function, guide function, and photographing function.

The home robot 100 may be connected to a mobile terminal 200 through a network.

The mobile terminal 200 may include a portable device that can be carried by a user. For example, the mobile terminal 200 may include a mobile phone, a smart phone, a terminal, or a tablet PC (Tablet Personal Computer).

The mobile terminal 200 may be communicatively connected to the home robot 100 wirelessly. The mobile terminal 200 may control the home robot 100 through network communication.

The network communication may include RF (Radio Frequency), Wi-Fi (Wireless Fidelity), Bluetooth, Zigbee, NFC (Near Field Communication), or UWB (Ultra-Wide Band) communication.

The mobile terminal 200 may include a GPS (Global Positioning System). The GPS may receive signals transmitted from GPS satellites and calculate a current location of a user (mobile terminal). The current location of the user may be transmitted to the home robot 100 in real time.

The home robot 100 may be connected to a remote control device 300 through a network.

The remote control device 300 may include a computer such as a desktop or a laptop, or an imaging device such as a camera or a camcorder having wired or wireless communication functions.

The remote control device 300 may be communicatively connected to the home robot 100 through wired or wireless communication. The remote control device 300 may control the home robot 100 through network communication.

The network communication may include RF (Radio Frequency), Wi-Fi (Wireless Fidelity), Bluetooth, Zigbee, NFC (Near Field Communication), or UWB (Ultra-Wide Band) communication.

The home robot 100 may be connected to a charging station 400 through a network.

The charging station 400 performs a function of charging a battery power of the home robot 100. The charging station 400 may be installed at any location indoors. The home robot 100 may move to the charging station 400 and charge a battery when receiving a charging command or when a remaining battery level becomes equal to or less than a predetermined ratio.

The charging station 400 may be communicatively connected to the home robot 100 through wired or wireless communication. The charging station 400 may control the home robot 100 through network communication.

The network communication may include RF (Radio Frequency), Wi-Fi (Wireless Fidelity), Bluetooth, Zigbee, NFC (Near Field Communication), or UWB (Ultra-Wide Band) communication.

The home robot 100 may be connected to a server 500 through a network.

The server 500 may store information related to the home robot 100 or collect and store information acquired by the home robot 100. The server 500 may update or manage and control software or applications of the home robot 100.

The server 500 may be communicatively connected to the home robot 100 through wired or wireless communication. The server 500 may control the home robot 100 through network communication.

The network communication may include RF (Radio Frequency), Wi-Fi (Wireless Fidelity), Bluetooth, Zigbee, NFC (Near Field Communication), or UWB (Ultra-Wide Band) communication.

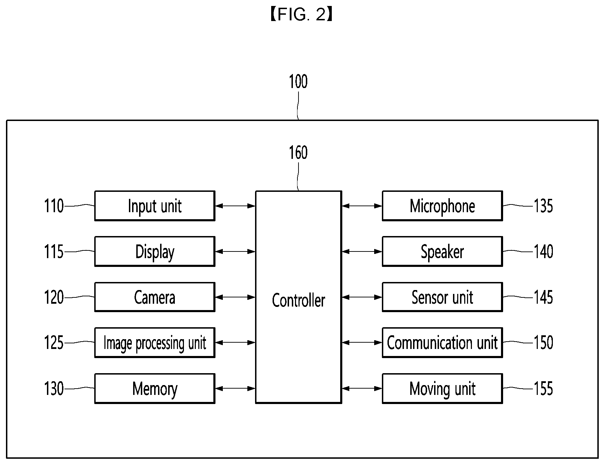

FIG. 2 is a block diagram showing an internal configuration of a home robot according to an embodiment of the present invention.

Referring to FIG. 2, the home robot 100 may include one or more of an input unit 110, a display 115, a camera 120, an image processing unit 125, a memory 130, a microphone 135, a speaker 140, a sensor unit 145, a communication unit 150, and a moving unit 155.

The input unit 110 is a component for receiving user information and a control command from a user. The input unit 110 may include a physical button-type key, a touch pad, or a touch screen.

For example, user information for image capturing may be registered through the input unit 110. In addition, individual image capturing conditions and situation-based image capturing conditions may be set through the input unit 110.

The display 115 is a component for displaying various information to a user. Various menus and icons for controlling the home robot 100 may be displayed on the display 115.

For example, registered user information, individual image capturing conditions, and situation-based image capturing conditions may be displayed on the display 115.

An image, a photo album, or a moving image captured by the camera 120 may be displayed on the display 115.

The camera 120 is a component for capturing a person or a background image. The camera 120 may include a lens for image capture and an image sensor. The camera 120 may include a 3D depth camera for detecting a distance from a subject.

The camera 120 may recognize a face image of a person in an image being captured. The camera 120 may detect feature points or edge portions of the face image, and recognize the face image by comparing the detected feature points or edge portions with a previously stored image.

The camera 120 may detect and store a specific object in an image being captured. The camera 120 may recognize a specific object by comparing feature points or edge portions of the specific object in the captured image with a previously stored image. The camera 120 may recognize furniture such as a dining table, a sofa, a desk, and a bed provided in an indoor space.

The image processing unit 125 performs a function of processing and analyzing image data acquired by the camera 120. The image processing unit 125 may compare an image acquired by the camera 120 with an image stored in the memory 130.

The image processing unit 125 may generate an electronic album or a moving image using an image acquired by the camera 120.

The memory 130 stores various programs and commands for controlling the home robot 100. Registered user information may be stored in the memory 130. Image data acquired by the camera 120 or image data processed by the image processing unit 125 may be stored in the memory 130.

The microphone 135 is a component for receiving an external sound. The home robot 100 may receive a sound through the microphone 135 while moving in a predetermined area and recognize a specific sound or sound source.

The speaker 140 is a component for outputting a sound. A song or a voice may be output through the speaker 140.

The sensor unit 145 may include various sensors for autonomous driving of the home robot 100. The sensor unit 145 may include a LiDAR sensor, an acceleration sensor, a gyro sensor, a distance detection sensor, a human body detection sensor, and an obstacle avoidance sensor.

The communication unit 150 is a component for communicatively connecting with an external device through wired or wireless communication. The communication unit 150 includes a wired/wireless communication module for communicating with one or more external devices.

The home robot 100 may be connected through a network to at least one of the mobile terminal 200, the remote control device 300, the charging station 400, and the server 500 through the communication unit 150.

The network communication may include RF (Radio Frequency), Wi-Fi (Wireless Fidelity), Bluetooth, Zigbee, NFC (Near Field Communication), or UWB (Ultra-Wide Band) communication.

The moving unit 155 is a driving unit for providing mobility to the home robot 100. The moving unit 155 may include wheels, a motor, and an auxiliary device for traveling for autonomous driving.

The home robot 100 may further include a controller 160 for performing driving and overall control of the home robot 100.

The controller 160 may control one or more of the input unit 110, the display 115, the camera 120, the image processing unit 125, the memory 130, the microphone 135, the speaker 140, the sensor unit 145, the communication unit 150, and the moving unit 155.

The controller 160 may generate a traveling map using the camera 120 and the sensor unit 145. The controller 160 may generate a traveling map of an indoor space from an image captured while the home robot 100 moves in a predetermined area and information about a surrounding environment.

In addition, the controller 160 may capture a face image of a user while the home robot 100 moves in a predetermined area. The controller 160 may determine a condition for image capturing, and may automatically capture an image when the condition is satisfied.

For example, the controller 160 may register user information for image capturing, and set individual image capturing conditions and situation-based image capturing conditions, respectively. The controller 160 may determine whether the individual image capturing conditions and the situation-based image capturing conditions are satisfied, and may control to capture an image when the individual image capturing conditions and the situation-based image capturing conditions are satisfied.

Hereinafter, a control method of a home robot (controller) according to an embodiment of the present invention will be described in detail with reference to the drawings.

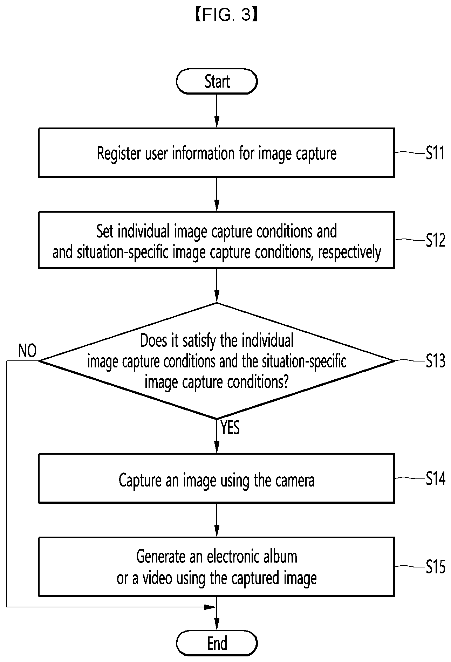

FIG. 3 is a flowchart briefly illustrating a control method of a home robot according to an embodiment of the present invention.

Referring to FIG. 3, the controller 160 registers user information for image capturing.

Specifically, the controller 160 receives and registers information on a user in order to capture an image for a specific user. As an example, the user information may include at least one of a face image, date of birth, and anniversary.

In order to register the face image, the controller 160 may capture the face image of the user through the camera 120.

The captured face image may be processed into data through the image processing unit 125 and then stored in the memory 130. As an example, feature points of the face may be extracted from the captured face image, and the extracted feature points may be stored in the memory 130 (S11).

The controller 160 sets individual image capturing conditions and situation-based image capturing conditions, respectively.

Specifically, the controller 160 may set in advance the image capturing conditions for each individual user. The individual image capturing conditions may include at least one of whether image capturing is allowed, an image capturing date, an image capturing time, and an image capturing cycle.

That is, the user may set the individual image capturing conditions to change and set whether image capturing is performed, the image capturing date, the image capturing time, and the image capturing cycle.

In addition, the controller 160 may set in advance the situation-based image capturing conditions. The situation-based image capturing conditions may include at least one of a user emotional state, user return home, family meal, and anniversary. The user emotional state may include a positive state, a negative state, and a neutral state.

That is, the user may set the situation-based image capturing conditions to change and set the capturing conditions so that capturing is performed only in a desired situation (S12).

The controller 160 determines whether the individual image capturing conditions and the situation-based image capturing conditions are satisfied, and when each condition is satisfied, may capture an image by using the camera.

Specifically, the controller 160 may determine the situation-based image capturing conditions in a process in which the home robot 100 travels in a predetermined area.

As an example, when the situation-based image capturing condition is set to a user emotional state, the controller 160 may determine the emotional state of the user through a face image of the user acquired by the camera 120.

When the determined emotional state of the user is an emotional state set for capturing, the controller 160 may capture the face image of the user by using the camera 120.

As another example, when the situation-based image capturing condition is set to user return home, the controller 160 may determine the user return home based on whether a mobile terminal 200 of the user is located within a Geo-fencing area constructed by using GPS.

When it is determined that the user has returned home, the controller 160 may capture the face image of the user by using the camera 120.

As another example, when the situation-based image capturing condition is set to a family meal, the controller 160 may determine the family meal through the number of face images of users adjacent to a specific object detected in an image acquired by the camera 120.

When it is determined that the number of face images of users adjacent to the specific object is plural, the controller 160 may capture the face image of the user by using the camera 120.

As another example, when the situation-based image capturing condition is set to an anniversary, the controller 160 may determine the anniversary through sound acquired by the microphone 135.

When it is determined to be an anniversary through the sound, the controller 160 may capture the face image of the user by using the camera 120 (S13, S14).

The controller 160 may generate an electronic album or a video by using the captured images.

Specifically, the controller 160 may generate an electronic album or a video by using a plurality of captured images through the image processing unit 125. The generated electronic album or video may be stored in the memory 130.

In addition, the generated electronic album or video may be transmitted to and stored in the mobile terminal 200 or the server 500 (S15).

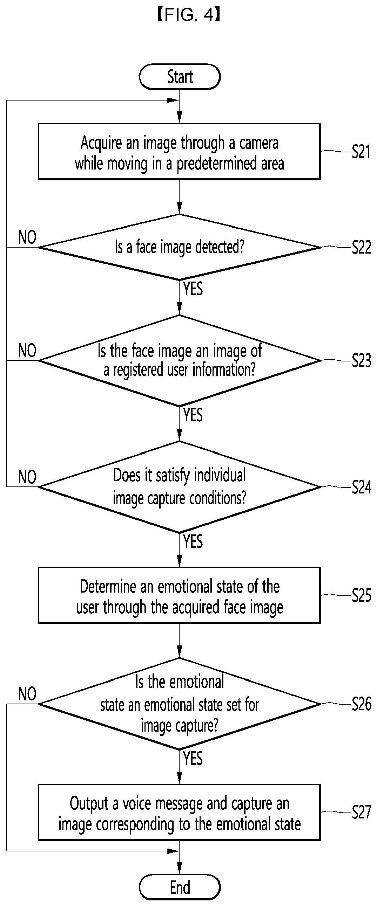

FIG. 4 is a flowchart illustrating a control method of the home robot when the situation-based image capturing condition is set to a user emotional state according to an embodiment of the present invention.

Referring to FIG. 4, the controller 160 acquires an image through the camera while moving in a predetermined area.

Specifically, the controller 160 may acquire an image through the camera 120 while moving based on a predetermined area or a pre-generated travel map.

The camera 120 may always be driven in a process in which the home robot 100 moves in the predetermined area. Alternatively, the camera 120 may be driven from a moment when the home robot 100 enters a specific area. Alternatively, when a human body is detected by the sensor unit 145 of the home robot 100, the camera 120 may be driven (S21).

The controller 160 determines whether a face image is detected in the acquired image, and when a face image is detected, determines whether the face image is a face image of registered user information.

Specifically, the controller 160 determines whether feature points of a face exist in the acquired image, and when feature points of the face exist, may determine that the face image is detected.

When a face image is detected in the acquired image, the controller 160 may recognize the user by comparing the detected face image with the face image of user information stored in advance (S22, S23).

When the user is recognized through comparison of the face image, the controller 160 determines whether the individual image capturing conditions are satisfied.

The individual image capturing conditions may be set in advance. The individual image capturing conditions may include at least one of whether image capturing is allowed, an image capturing date, an image capturing time, and an image capturing cycle (S24).

If the face image is not detected, or the face image of the registered user information is not recognized, or the individual image capturing conditions are not satisfied, the controller 160 may return to step S21.

When the individual image capturing conditions are satisfied, the controller 160 determines an emotional state of the user through the acquired face image.

Specifically, the controller 160 may estimate the emotional state by using a machine learning technique. As an example, the controller 160 may estimate a facial expression and an emotional state of a person by using convolutional neural network (CNN) deep learning (S25).

The controller 160 determines whether the emotional state is an emotional state set for image capturing, and when it is the set emotional state, may output a voice message corresponding to the emotional state and capture an image.

When the emotional state set for capturing is a positive state, the controller 160 may output a voice message having a positive meaning while capturing the face image.

As an example, through the speaker 140, a positive voice such as "You look happy!", "Seeing you smile makes me happy too!" may be output.

When the emotional state set for capturing is a negative state, the controller 160 may output a voice message having a consoling meaning while capturing the face image.

As an example, through the speaker 140, a consoling voice such as "You seem upset", "I hope you feel better" may be output.

When the emotional state set for capturing is a neutral state, the controller 160 may output a voice message having a neutral meaning while capturing the face image.

As an example, through the speaker 140, a voice such as "I missed you!", "I have been waiting for you!" may be output (S26, S27).

If the emotional state of the user is not the emotional state set for image capturing, the controller 160 may terminate the algorithm without performing the voice message output and the image capturing operation.

According to the configuration of the present invention, since image capturing can be automatically performed in a situation (emotional state) desired by a user, an emotional service can be provided to the user and a photo album can be easily generated.

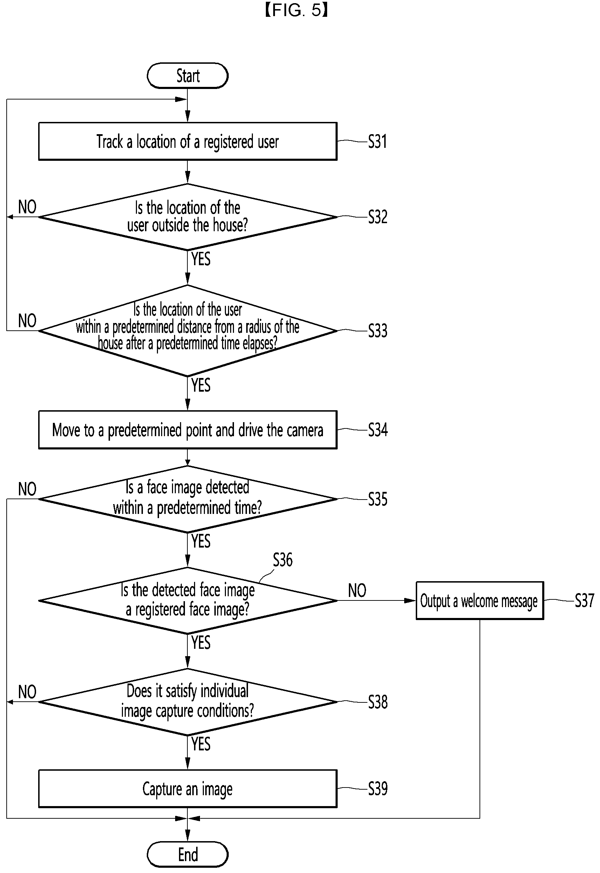

FIG. 5 is a flowchart illustrating a control method of the home robot when the situation-based image capturing condition is set to user return home according to an embodiment of the present invention.

Referring to FIG. 5, when the situation-based image capturing condition is set to user return home, the controller 160 tracks a location of a registered user and determines whether the location of the user is outside a house.

Specifically, the controller 160 may determine whether a mobile terminal 200 of the user is located within a Geo-fencing area constructed by using GPS.

Here, the Geo-fencing area constructed by using GPS may mean an area corresponding to a predetermined radius based on a home. As an example, the constructed Geo-fencing area may be an area corresponding to a radius of 500 meters based on the home.

In general, when a user goes out, the user may carry the mobile terminal 200. Accordingly, the location of the user may be estimated by tracking the location of the mobile terminal 200 (S31, S32).

When the location of the user is outside the house, the controller 160 determines whether the location of the user is within a predetermined distance from the house after a predetermined time has elapsed.

Here, a reason for determining the location of the user after a predetermined time has elapsed is to determine whether the user temporarily goes out and returns.

That is, when the user temporarily goes out and returns, an operation for image capturing may not be performed. As an example, the predetermined time may be 1 hour.

In addition, a reason for determining whether the location of the user is within the predetermined distance from the house is to determine whether the user heads to the house for returning.

That is, when the user who has gone out is located within the predetermined distance from the house after the predetermined time has elapsed, it may be determined that the user heads to the house for returning (S33).

When the location of the user is within the predetermined distance from the house after the predetermined time has elapsed, the controller 160 moves to a predetermined point, drives the camera, and determines whether a face image is detected within a predetermined time.

Specifically, when it is expected that the user will soon return, the controller 160 may move to a predetermined point and drive the camera 120.

For example, the controller 160 may move the home robot 100 to an entrance or a living room and then acquire an image through the camera 120. When the user returns and enters the entrance or the living room, a face image may be detected through the camera 120 (S34, S35).

When a face image is detected within the predetermined time, the controller 160 determines whether the detected face image is a registered face image, and when the detected face image is not the registered face image, outputs a welcome message.

Specifically, the controller 160 may recognize the user by comparing the detected face image with a face image of user information stored in advance. When the detected face image is not a face image of a registered user, the controller 160 may recognize the person as a guest and output a preset welcome message.

As an example, through the speaker 140, a voice such as "Nice to meet you. I am a home robot." may be output (S36, S37).

Meanwhile, when the detected face image is a face image of the registered user, the controller 160 determines whether individual image capturing conditions are satisfied, and when the individual image capturing conditions are satisfied, may capture an image.

The individual image capturing conditions may be set in advance. The individual image capturing conditions may include at least one of whether image capturing is allowed, an image capturing date, an image capturing time, and an image capturing cycle.

When the individual image capturing conditions are satisfied, the controller 160 may capture an image including the face image.

Meanwhile, when a face image is not detected within the predetermined time in step S35, or when the individual image capturing conditions are not satisfied in step S38, the controller 160 may terminate the algorithm without performing an image capturing operation.

According to the configuration of the present invention, since image capturing can be automatically performed in a situation (user return home) desired by a user, it is possible to provide a more emotional service to the user and easily create a photo album.

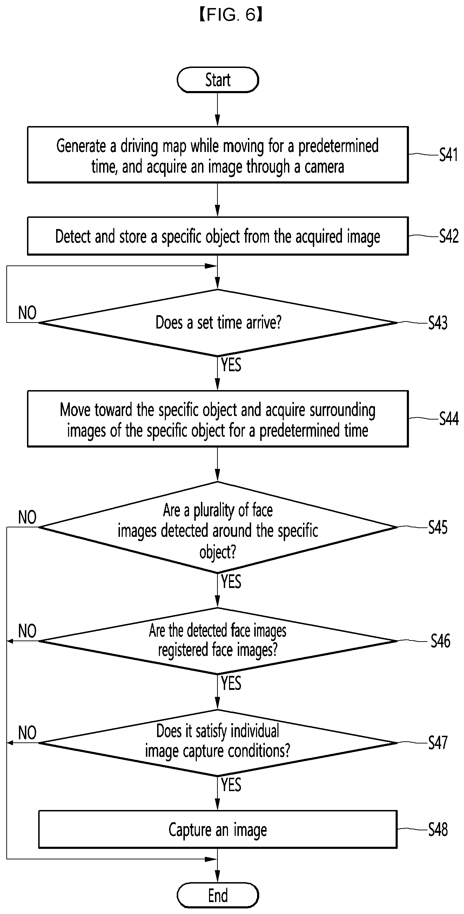

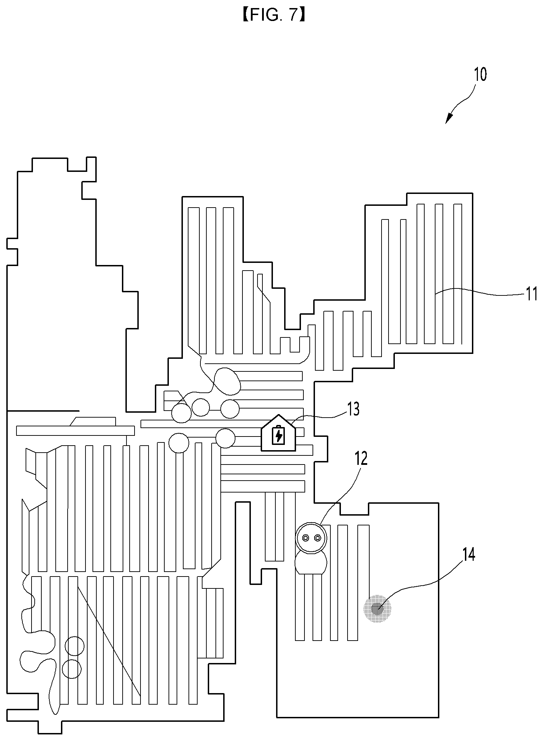

FIG. 6 is a flowchart illustrating a control method of the home robot when the situation-based image capturing condition is set to a family meal according to an embodiment of the present invention, and FIG. 7 is a view illustrating a travel map of the home robot according to an embodiment of the present invention.

The home robot 100 according to the present embodiment may be a robot having a cleaning function for cleaning a predetermined area by including a moving module and a suction module. The robot may generate map data (cleaning map) of an indoor space from information on a surrounding environment while moving within the predetermined area.

Referring to FIG. 6 and FIG. 7, the controller 160 generates a travel map while moving within a predetermined area and acquires an image through the camera, and detects and stores a specific object in the acquired image.

Specifically, the controller 160 may generate map data of an indoor space from information on the surrounding environment while moving within an indoor space of a house. As an example, the controller 160 may generate a travel map 10 by using an image acquired through the camera 120 and travel information and spatial information acquired through the sensor unit 145.

The travel map 10 may include a travel path 11 along which the home robot 100 travels, an icon 12 indicating a position of the home robot 100, an icon 13 indicating a position of the charging station 400, and an icon 14 indicating a position of a specific object 14.

In particular, the controller 160 may detect specific furniture or home appliances in the image acquired through the camera 120 and store the detected furniture or home appliances in the travel map 10. As an example, in order to determine a family meal, the controller 160 may detect and store a dining table, a sofa, or a table at which a family may gather (S41, S42).

The controller 160 determines whether a preset time has arrived, and when the preset time has arrived, moves toward the specific object and acquires an image around the specific object for a predetermined time.

Specifically, the controller 160 determines whether a current time is a preset meal time, and when the meal time has arrived, may move the home robot 100 to a position of the specific object. Then, the controller 160 may drive the camera 120 and capture an image around the specific object (S43, S44).

The controller 160 determines whether a plurality of face images are detected around the specific object in the acquired image.

For example, in order to determine a family meal, the controller 160 may determine whether a plurality of face images are detected around the specific object (e.g., dining table, sofa, or table).

When a plurality of face images are detected around the specific object, it may be estimated as a family meal or a family gathering (S45).

When the plurality of face images are detected, the controller 160 determines whether the detected face images are registered face images, and when the detected face images are registered face images, determines whether individual image capturing conditions are satisfied, and when the individual image capturing conditions are satisfied, captures an image.

Specifically, the controller 160 may recognize users by comparing the detected plurality of face images with face images of user information stored in advance.

When all of the detected plurality of face images match the face images of user information stored in advance, the controller 160 may check the individual image capturing conditions.

The individual image capturing conditions may be set in advance. The individual image capturing conditions may include at least one of whether image capturing is allowed, an image capturing date, an image capturing time, and an image capturing cycle.

When the individual image capturing conditions are satisfied, the controller 160 may capture an image including the plurality of face images (S46, S47, S48).

Meanwhile, when a plurality of face images are not detected around the specific object in step S45, or when the detected face images are not registered face images in step S46, or when the individual image capturing conditions are not satisfied in step S47, the controller 160 may terminate the algorithm without performing an image capturing operation.

According to the configuration of the present invention, since image capturing can be automatically performed in a situation (family meal) desired by a user, it is possible to provide a more emotional service to the user and easily create a photo album.

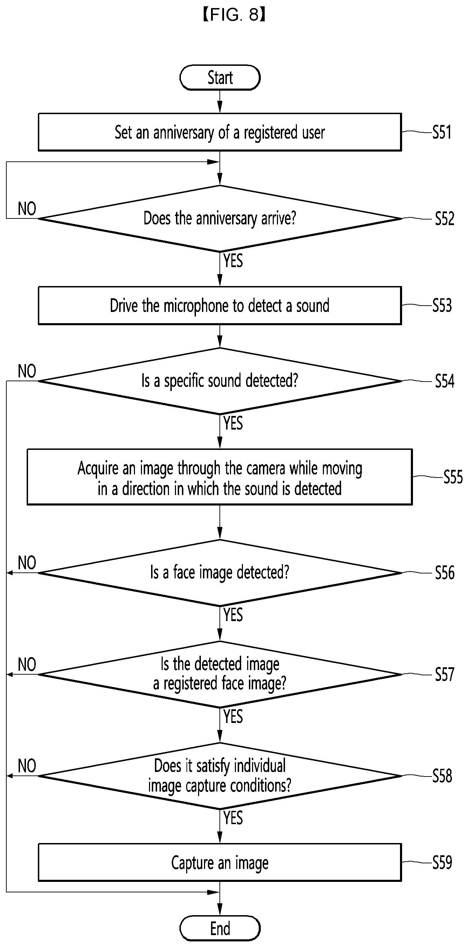

FIG. 8 is a flowchart illustrating a control method of the home robot when the situation-based image capturing condition is set to an anniversary according to an embodiment of the present invention.

Referring to FIG. 8, when the situation-based image capturing condition is set to an anniversary, the controller 160 sets an anniversary of a registered user and determines whether the anniversary arrives. The controller 160 may receive an input of the anniversary through the input unit 110 (S51, S52).

When the anniversary arrives, the controller 160 drives the microphone to detect sound and determines whether a specific sound is detected.

Specifically, when the anniversary arrives, the controller 160 may detect sound of an indoor space by using the microphone 135.

Here, the specific sound may include a Happy Birthday Song sung on the anniversary. The specific sound may be set by the user (S53, S54).

When the specific sound is detected, the controller 160 moves in a direction in which the sound is detected, acquires an image through the camera, and determines whether a face image is detected in the acquired image.

Specifically, the controller 160 may move the home robot 100 in the direction in which the specific sound is detected. Then, the controller 160 may drive the camera 120 and capture an image in the direction in which the specific sound is detected.

The controller 160 may determine whether a face image is detected in the acquired image (S55, S56).

When a face image is detected, the controller 160 determines whether the detected face image is a registered face image, and when the detected face image is a registered face image, determines whether individual image capturing conditions are satisfied, and when the individual image capturing conditions are satisfied, captures an image.

Specifically, the controller 160 may recognize a user by comparing the detected face image with a face image of user information stored in advance.

The individual image capturing conditions may be set in advance. The individual image capturing conditions may include at least one of whether image capturing is allowed, an image capturing date, an image capturing time, and an image capturing cycle.

When the individual image capturing conditions are satisfied, the controller 160 may capture an image including the face image (S57, S58, S59).

Meanwhile, when the specific sound is not detected in step S54, or when a face image is not detected in step S56, or when the detected face image is not a registered face image in step S57, or when the individual image capturing conditions are not satisfied in step S58, the controller 160 may terminate the algorithm without performing an image capturing operation.

According to the configuration of the present invention, since image capturing can be automatically performed in a situation (anniversary) desired by a user, it is possible to provide a more emotional service to the user and easily create a photo album.

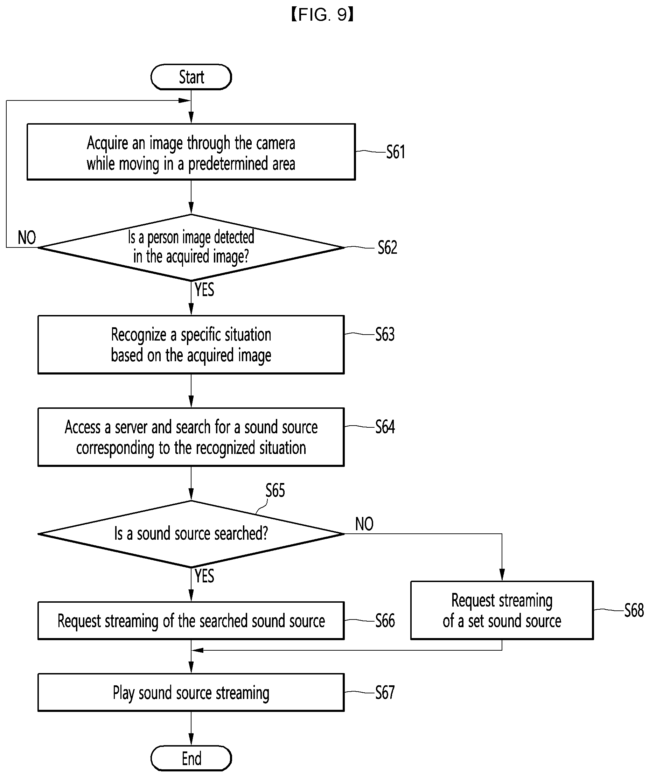

FIG. 9 is a flowchart illustrating a control method of the home robot according to another embodiment of the present invention.

Referring to FIG. 9, the controller 160 acquires an image through the camera while moving within a predetermined area.

Specifically, the controller 160 may acquire an image through the camera 120 while moving based on a predetermined area or a pre-generated travel map.

The camera 120 may always be driven in a process in which the home robot 100 moves within the predetermined area. Alternatively, the camera 120 may be driven from a moment when the home robot 100 enters a specific area. Alternatively, when a human body is detected by the sensor unit 145 of the home robot 100, the camera 120 may be driven (S61).

The controller 160 determines whether a person image is detected in the acquired image.

Specifically, the controller 160 may detect images of a face, a torso, and limbs of a person in the acquired image, and determine whether a person is recognized by combining the respective body images (S62).

When a person image is detected, the controller 160 recognizes a specific situation based on the acquired image, connects to a server, and searches for a sound source corresponding to the recognized situation.

Specifically, the controller 160 may estimate a situation of a user through the acquired image by using a machine learning technique.

For example, when two or more persons are seated at a dining table in the acquired image, the controller 160 may recognize a situation as eating.

As another example, when two or more persons are seated on a sofa in the acquired image, the controller 160 may recognize a situation as drinking tea.

As another example, when a user is seated at a desk in the acquired image, the controller 160 may recognize a situation as working from home or studying (S63).

When the specific situation is recognized, the controller 160 connects to the server and searches for a sound source corresponding to the recognized situation.

Specifically, when the specific situation is recognized, the controller 160 may connect to a streaming server and search for a sound source corresponding to the recognized situation.

For example, in a situation of eating, the controller 160 may search for a comfortable sound source that can assist eating.

As another example, in a situation of drinking tea, the controller 160 may search for a calm sound source.

As another example, in a situation of working from home or studying, the controller 160 may search for a sound source that enhances concentration (S64).

The controller 160 determines whether the sound source is searched, and when the sound source is searched, requests streaming of the searched sound source and reproduces the streaming of the sound source.

Specifically, the controller 160 may connect to the streaming server, transmit a streaming request for the searched sound source, and reproduce the requested sound source streaming in real time (S65, S66, S67).

When the sound source is not searched, the controller 160 requests streaming of a preset sound source and reproduces the streaming of the sound source.

Specifically, when the sound source search fails, the controller 160 may transmit a streaming request for another preset sound source and reproduce the requested sound source streaming in real time. The preset sound source may be preset by a user or randomly set (S68, S67).

According to the configuration of the present invention, since a situation of a user can be determined through an image acquired by the camera and a sound source corresponding to the situation can be streamed and reproduced, it is possible to provide an emotional atmosphere by creating a surrounding environment suitable for the situation.

## Claims

1. A home robot, comprising:
a moving unit for traveling;
a camera for capturing an image; and
a controller controlling the moving unit and the camera,
wherein the controller is configured to:
register user information for image capturing;
set individual image capturing conditions and situation-based image capturing conditions, respectively;
determine whether the individual image capturing conditions and the situation-based image capturing conditions are satisfied while moving within a predetermined area by the moving unit, and
control the camera to capture an image when the individual image capturing conditions and the situation-based image capturing conditions are satisfied.

2. The home robot of claim 1, wherein the individual image capturing conditions comprise at least one of whether image capturing is allowed, an image capturing date, an image capturing time, and an image capturing cycle.

3. The home robot of claim 1, wherein the situation-based image capturing conditions comprise at least one of a user's emotional state, user return home, a family meal, and an anniversary.

4. The home robot of claim 3, wherein the controller determines the user's emotional state through a face image of the user acquired by the camera when the situation-based image capturing conditions are set to the user's emotional state.

5. The home robot of claim 4, wherein the controller outputs a voice message corresponding to the determined emotional state of the user when the emotional state of the user is determined through the face image of the user acquired by the camera.

6. The home robot of claim 3, wherein the controller determines the user return home based on whether a mobile terminal of the user is located within a Geo-fencing area constructed by using GPS (Global Positioning System) when the situation-based image capturing conditions are set to the user return home.

7. The home robot of claim 3, wherein the controller determines the family meal based on a number of face images of users adjacent to a specific object detected in an image acquired by the camera when the situation-based image capturing conditions are set to the family meal.

8. The home robot of claim 3, wherein the controller determines the anniversary based on specific music acquired by a microphone when the situation-based image capturing conditions are set to the anniversary.

9. The home robot of claim 1, wherein the controller captures an object corresponding to registered user information when the individual image capturing conditions and the situation-based image capturing conditions are satisfied.

10. The home robot of claim 1, wherein the controller generates an electronic album or a video by using the captured image.

11. A control method of a home robot, comprising:
registering user information for image capturing;
setting individual image capturing conditions and situation-based image capturing conditions, respectively;
determining whether the individual image capturing conditions and the situation-based image capturing conditions are satisfied while moving within a predetermined area by a moving unit; and
capturing an image by using a camera when the individual image capturing conditions and the situation-based image capturing conditions are satisfied.

12. The control method of the home robot of claim 11, wherein the individual image capturing conditions comprise at least one of whether image capturing is allowed, an image capturing date, an image capturing time, and an image capturing cycle.

13. The control method of the home robot of claim 11, wherein the situation-based image capturing conditions comprise at least one of a user's emotional state, user return home, a family meal, and an anniversary.

14. The control method of the home robot of claim 13, wherein when the situation-based image capturing conditions are set to the user's emotional state, the user's emotional state is determined through a face image of the user acquired by the camera.

15. The control method of the home robot of claim 14, wherein when the user's emotional state is determined through the face image of the user acquired by the camera, a voice message corresponding to the determined emotional state of the user is output.

16. The control method of the home robot of claim 13, wherein when the situation-based image capturing conditions are set to user return home, the user return home is determined based on whether a mobile terminal of the user is located within a Geo-fencing area constructed by using GPS (Global Positioning System).

17. The control method of the home robot of claim 13, wherein when the situation-based image capturing conditions are set to a family meal, the family meal is determined based on a number of face images of users adjacent to a specific object detected in an image acquired by the camera.

18. The control method of the home robot of claim 13, wherein when the situation-based image capturing conditions are set to an anniversary, the anniversary is determined based on sound acquired by a microphone.

19. The control method of the home robot of claim 11, further comprising capturing an object corresponding to registered user information when the individual image capturing conditions and the situation-based image capturing conditions are satisfied.

20. The control method of the home robot of claim 11, further comprising generating an electronic album or a video by using the captured image.
